Europäisches Patentamt

European Patent Office

Office européen des brevets

(19)

(11) **EP 1 391 051 B1**

(12) **EUROPÄISCHE PATENTSCHRIFT**

(45) Veröffentlichungstag und Bekanntmachung des Hinweises auf die Patenterteilung:
**31.05.2006 Patentblatt 2006/22**

(21) Anmeldenummer: **02729821.5**

(22) Anmeldetag: **25.03.2002**

(51) Int Cl.:
**H04B 1/707** (2006.01)

(86) Internationale Anmeldenummer:
**PCT/DE2002/001095**

(87) Internationale Veröffentlichungsnummer:
**WO 2002/093765 (21.11.2002 Gazette 2002/47)**

(54) **RAKE-EMPFÄNGER FÜR FDD UND TDD MODE**

RAKE RECEIVER FOR FDD AND TDD MODES

RECEPTEUR RAKE POUR LES MODES FDD ET TDD

(84) Benannte Vertragsstaaten:
**DE FI FR GB IT SE**

(30) Priorität: **14.05.2001 DE 10123334**

(43) Veröffentlichungstag der Anmeldung:
**25.02.2004 Patentblatt 2004/09**

(73) Patentinhaber: **Infineon Technologies AG**
**81669 München (DE)**

(72) Erfinder:
 • **JUNG, Peter**
  **67697 Otterberg (DE)**
 • **PLECHINGER, Jörg**
  **80469 München (DE)**
 • **SCHNEIDER, Michael**
  **81541 München (DE)**
 • **RUPRICH, Thomas**
  **80796 München (DE)**
 • **KELLA, Tideya**
  **80337 München (DE)**

(74) Vertreter: **Lange, Thomas**
**Patentanwälte**
**Lambsdorff & Lange**
**Dingolfinger Strasse 6**
**81673 München (DE)**

(56) Entgegenhaltungen:
 **EP-A- 1 050 973          WO-A-01/18976**

 • **POVEY G J R ET AL: "TDD-CDMA extension to FDD-CDMA based third generation cellular system" 1997 IEEE 6TH. INTERNATIONAL CONFERENCE ON UNIVERSAL PERSONAL COMMUNICATIONS RECORD. SAN DIEGO, 12 - 16. OCT. 1997, IEEE INTERNATIONAL CONFERENCE ON UNIVERSAL PERSONAL COMMUNICATIONS, NEW YORK, IEEE, US, Bd. 2 CONF. 6, 12. Oktober 1997 (1997-10-12), Seiten 813-817, XP010248819 ISBN: 0-7803-3777-8**
 • **PIGEONNAT Y: "Joint detection for UMTS: complexity and alternative solutions" VEHICULAR TECHNOLOGY CONFERENCE, 1999 IEEE 49TH HOUSTON, TX, USA 16-20 MAY 1999, PISCATAWAY, NJ, USA,IEEE, US, 16. Mai 1999 (1999-05-16), Seiten 546-550, XP010341933 ISBN: 0-7803-5565-2**

**Beschreibung**

Die Erfindung betrifft einen RAKE-Empfänger für den Empfang von spreizcodierten Signalen im FDD und TDD Mode.

Im UMTS-(Universal Mobile Telecommunications System-)Standard für die dritte Mobilfunkgeneration ist der FDD-(Frequency Division Duplex-)Mode für das sogenannte "unpaired band" (das für die Aufwärts- und Abwärtsstrecke getrennte Frequenzbänder aufweist) und der TDD-(Time Division Duplex-) Mode für das "paired band" (welches für die Aufwärts- und Abwärtsstrecke ein gemeinsam genutztes Frequenzband verwendet) vorgesehen.

Aufgrund der stark unterschiedlichen Spreizfaktoren dieser beiden Modi (während im TDD Mode der maximale Spreizfaktor gleich 16 ist, können im FDD Mode Spreizfaktoren bis zu 512 eingesetzt werden), ist es erforderlich, verschiedene Empfängertypen sowie unterschiedliche Entzerrer-Algorithmen zu verwenden, um einerseits einen möglichst geringen Signalverarbeitungsaufwand im FDD Mode zu gewährleisten und andererseits eine gegebene Dienstqualität (QoS: Quality of Services) im TDD Mode einhalten zu können.

In Multimode-Mobilfunkempfängern ist daher in der Regel die Implementierung eines RAKE-Empfängers mit einer MF-(Matched Filter: angepasstes Filter-)Entzerrung für den FDD Mode und eines Mehrteilnehmer-Empfängers mit JD-(Joint Detection-) Entzerrung für den TDD Mode erforderlich.

RAKE- und Mehrteilnehmer-Empfänger sind grundlegend unterschiedliche Empfängerkonzepte. Der RAKE-Empfänger basiert auf dem Prinzip, die durch Mehrwegeausbreitung verursachten Signalstörungen durch Detektion der einzelnen Signalversionen, welche über die verschiedenen Ausbreitungswege empfangen werden, und nachfolgendes zeitrichtiges Zusammenführen dieser Signalversionen, zu unterdrücken. Die Mehrteilnehmerdetektion beruht auf der Idee, die durch andere aktive Mobilfunkteilnehmer verursachten Störungen (sog. Intrazelleninterferenz) durch explizite Detektion dieser Teilnehmersignale zu eliminieren, d.h. auszunutzen, dass die durch die Aktivitäten anderer Teilnehmer verursachten Störungen deterministisch (kein Rauschen) sind.

Die Implementierung von zwei unterschiedlichen Empfängerstrukturen in Multimode-Mobilfunkempfängern wirkt sich ungünstig auf die Herstellungskosten aus und beeinträchtigt ferner technische Parameter wie z.B. den Leistungsverbrauch. Es ist daher wünschenswert, eine gemeinsame Empfängerstruktur zu schaffen, die sowohl für den Betrieb im FDD als auch im TDD Mode geeignet ist.

Das Dokument "1997 Ieee 6th. International Conference On Universal Personal Communications Record. San Diego, 12 - 16. Oct. 1997, Ieee International Conference On Universal Personal Communications, New York, Ieee, Us (12-10-1997), 2 CONF. 6, Seiten 813-817" wird als nächstliegender Stand der Technik gegenüber dem Gegenstand der unabhängigen Ansprüchen 1 und 8 angesehen. Es offenbart einen RAKE-Empfänger für den Empfang von mit Chipsequenzen spreizkodierten Signalen im FDD und TDD Mode, mit

- einer Mehrzahl von RAKE-Fingern,
- einem den RAKE-Fingern zugeordneten Entzerrmittel zum Entzerren der in den einzelnen RAKE- Fingern verarbeiteten Signale gemäß Entzerrer-Koeffizienten,
- einem Mittel zum Berechnen der Entzerrer-Koeffizienten wahlweise für den FDD und den TDD Mode.

Der Erfindung liegt somit die Aufgabe zugrunde, eine gemeinsame Empfängerstruktur anzugeben, die einen Empfangsbetrieb sowohl im FDD als auch im TDD Mode ermöglicht. Ferner zielt die Erfindung darauf ab, ein Empfangsverfahren zu schaffen, welches auf möglichst einfache Weise einen Multimode FDD und TDD Betrieb ermöglicht.

Die der Erfindung zugrundeliegende Aufgabenstellung wird durch die Merkmale der unabhängigen Ansprüche gelöst.

Die erfindungsgemäße Empfängerstruktur ist demnach ein RAKE-Empfänger, welcher gemäß üblicher Bauart eine Mehrzahl von RAKE-Fingern umfasst. Den RAKE-Fingern ist ein Entzerrermittel zugeordnet, mittels welchem eine Entzerrung der in den einzelnen RAKE-Fingern verarbeiteten Signalen gemäß Entzerrer-Koeffizienten erfolgt. Der erfindungsgemäße Entzerrer umfasst ein Mittel zum Berechnen der Entzerrer-Koeffizienten wahlweise für den FDD und den TDD Mode z.B. auf der Basis einer Kanalschätzung. Erfindungsgemäß werden dabei für den TDD Mode die Entzerrer-Koeffizienten nach einem Mehrteilnehmer-Berechnungsverfahren für jeden Chip der zu entzerrenden Signale berechnet und auf diese angewendet.

Die Erfindung basiert auf der Erkenntnis, dass die bisher für die Einzelteilnehmerdetektion auf der Basis einer MF-Entzerrung eingesetzte RAKE-Empfängerstruktur auch für eine (im TDD Mode zwingend erforderliche) Mehrteilnehmerdetektion verwendbar ist, sofern Entzerrer-Koeffizienten - anders als im FDD Mode - pro Chip berechnet und mittels des Entzerrermittels auf die Signale der RAKE-Finger angewendet werden. Wie im folgenden noch näher erläutert, lässt sich auf diese Weise eine JD-Entzerrung mittels einer RAKE-Struktur durchführen, welche im Vergleich zu einem herkömmlichen RAKE-Empfänger lediglich geringfügige bauliche Änderungen aufweist.

Ein vorteilhaftes Ausführungsbeispiel der Erfindung kennzeichnet sich dadurch, dass im Signalweg vor dem Entzerrermittel in jedem RAKE-Finger eine Einheit zur Signalratenverminderung, insbesondere Akkumulator, vorgesehen ist, und dass ferner ein Mittel zum Überbrücken der Einheit zur Signalratenverminderung vorhanden ist. Durch das Mittel zum Überbrücken der Einheit zur Signalratenverminderung wird erreicht, dass die Signalrate am Eingang des Entzerrermittels wahlweise auf die Symbolrate (welche für die z.B. MF-Entzerrung im FDD Mode benötigt wird) oder auf die Chiprate (welche für die JD- oder Mehrteilnehmer-Entzerrung im TDD Mode benötigt wird) einstellbar ist.

Eine weitere vorteilhafte Ausgestaltung des erfindungsgemäßen RAKE-Empfängers kennzeichnet sich dadurch, dass im Signalweg hinter dem Entzerrermittel ein Combiner vorgesehen ist, der Ausgangssignale von RAKE-Fingern, die demselben physikalischen Kanal zugeordnet sind, akkumuliert, und dass der Combiner ausgelegt ist, im TDD Mode eine Signalratenverminderung von der Chiprate in die Symbolrate durchzuführen. Das heißt, im TDD Mode wirkt der Combiner zusätzlich als Integrate-and-Dump Einheit, welche die von dem Entzerrermittel ausgegebenen gewichteten Chips über eine Symbolzeitdauer akkumuliert und infolgedessen die Signalrate von der Chiprate in die Symbolrate wandelt.

Eine weitere vorteilhafte Ausführungsvariante des erfindungsgemäßen RAKE-Empfängers kennzeichnet sich dadurch, dass dem insbesondere als Multipliziererfeld realisierten Entzerrermittel ein Multiplexer vorgeschaltet und ein Demultiplexer nachgeschaltet ist. Durch die Multiplexierung des Entzerrermittels wird erreicht, dass mehrere RAKE-Finger einem einzelnen Funktionselement (Multiplizierer) des Entzerrermittels zugeordnet werden können.

Das Mittel zum Berechnen der Entzerrer-Koeffizienten führt im TDD Mode vorzugsweise eine Zero Forcing (ZF) Berechnung zur Ermittlung der Entzerrer-Koeffizienten durch. Bei der ZF-Entzerrung handelt es sich um einen aufwandsgünstigen JD-Entzerrungs-Algorithmus zur Berechnung der Entzerrer-Koeffizienten.

Weitere vorteilhafte Ausgestaltungen der Erfindung sind in den Unteransprüchen angegeben.

Die Erfindung wird nachfolgend anhand eines Ausführungsbeispiels unter Bezugnahme auf die Zeichnung näher erläutert; in dieser zeigt:

Fig. 1 ein vereinfachtes Blockschaltbild zur Erläuterung der Struktur des Basisband-Abschnittes eines erfindungsgemäßen RAKE-Empfängers;

Fig. 2 die in Fig. 1 dargestellten Schaltungsabschnitte RF und CB in größerer Einzelheit;

Fig. 3 den in Fig. 2 dargestellten Schaltungsabschnitt CB in größerer Einzelheit; und

Fig. 4 eine Darstellung zur Erläuterung einer JD-Entzerrung mittels eines RAKE-Empfängers.

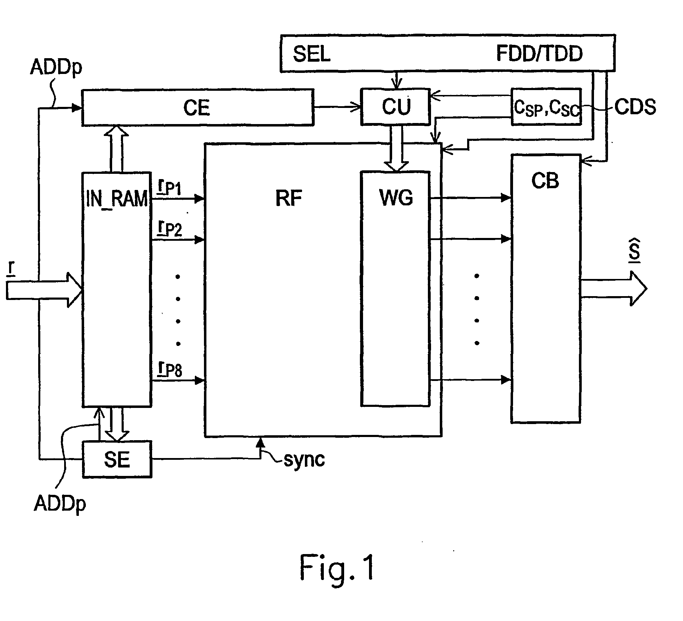

Nach Fig. 1 weist der Basisband-Abschnitt eines erfindungsgemäßen RAKE-Empfängers einen Eingangsspeicher IN_RAM auf, dem ein Signal bestehend aus einem Strom komplexer Daten $\underline{r}$ zugeführt wird. Der Eingangsspeicher IN_RAM führt eine Zwischenspeicherung der Daten $\underline{r}$ durch.

Die Erzeugung der Basisband-Daten $\underline{r}$ erfolgt auf übliche Weise, z.B. mittels einer (nicht dargestellten) Heterodyn-Stufe. Diese umfasst z.B. eine Hochfrequenz-Mischstufe, welche aus einem über eine Antenne empfangenen Signal analoge Inphase(I)- und Quadratur(Q)-Signalkomponenten erzeugt und diese durch Frequenzmischung auf eine geeignete Zwischenfrequenz oder in das Basisband heruntermischt. Die heruntergemischten analogen I- und Q-Signalkomponenten werden von Analog-Digital-Umsetzern digitalisiert. Die Digitalisierung erfolgt z.B. mit einer Abtastrate von $2/T_C$, wobei mit $T_C$ die Chipzeitdauer des empfangenen Datensignals bezeichnet ist. Somit können die einzelnen Chips der für den CDMA-Vielfachzugriff verwendeten Spreizcodes aufgelöst werden (in UMTS-Mobilfunksystemen beträgt die Chipzeitdauer $T_C$ = 0,26 µs, d.h. eine Abtastrate von $2/T_C$ entspricht etwa 8 MHz).

Die digitalisierten I- und Q- Signalkomponenten werden dann in ebenfalls bekannter Weise mittels eines digitalen Tiefpassfilters geglättet und gegebenenfalls durch eine Frequenz-Korrektureinheit frequenzkorrigiert.

Eine Such- und Synchronisationseinheit SE greift auf die in dem Eingangsspeicher IN_RAM abgelegten Daten $\underline{r}$ zu und führt anhand einer Auswertung darin enthaltener oder zuvor aus dem Datensignal separierter Pilotsymbole eine Erkennung der Datenstruktur, unterschiedlicher, über verschiedene Ausbreitungswege (Pfade) erhaltener Signalversionen und der zeitlichen Lagen der Signalversionen durch.

Von der Such- und Synchronisationseinheit SE ermittelte Pfadinformation $ADD_P$ betreffend dem Auftreten und der Anzahl unterschiedlicher Signalversionen wird dem Eingangsspeicher IN_RAM zugeleitet und Synchronisationsinformation Sync wird einem RAKE-Finger-Abschnitt RF des RAKE-Empfängers zugeführt.

Der RAKE-Finger-Abschnitt RF umfasst mehrere RAKE-Finger. Mittels der Pfadinformation ADDp wird in später noch näher erläuterter Weise eine Verteilung der Daten $\underline{r}$ auf unterschiedliche RAKE-Finger vorgenommen. Durch die Synchronisationsinformation Sync wird eine Synchronisation dieser Daten in den RAKE-Fingern herbeigeführt.

Innerhalb des RAKE-Finger-Abschnittes RF ist eine Gewichtungseinheit WG angeordnet, die aus einem Hardeware-Multipliziererfeld aufgebaut ist und eine Gewichtung der Signale in den einzelnen RAKE-Fingern vornimmt. Der Gewichtungseinheit WG werden Entzerrer-Koeffizienten zugeführt, die mittels einer Berechnungseinheit CU berechnet werden.

Am Ausgang des RAKE-Finger-Abschnitts RF stehen Ausgangssignale der einzelnen RAKE-Finger bereit. Diese werden gemäß üblichem Aufbau eines RAKE-Empfängers einem Combiner CB (z.B. einem Maximum Ratio Combiner) zugeführt. Der Combiner CB nimmt eine Addition derjenigen in den einzelnen RAKE-Fingern verarbeiteten Signalversionen vor, die einem einzigen physikalischen Kanal zugeordnet sind, und gibt einen Strom geschätzter Datensymbole $\hat{\underline{s}}$ aus. D.h., mit $\hat{\underline{s}}$ werden die empfängerseitig ermittelten Rekonstruktionen der von einem Sender gesendeten Datensymbole $\underline{s}$ bezeichnet.

Der in Fig. 1 dargestellte Basisband-Abschnitt des RAKE-Empfängers weist ferner einen Kanalschätzer CE auf, welcher diskrete Impulsantworten für den bzw. die empfangenen physikalischen Kanäle beziehungsweise deren unterschiedliche Übertragungspfade ermittelt.

Die von dem Kanalschätzer CE ermittelten zeitdiskreten Impulsantworten werden der Berechnungseinheit CU zur Berechnung von Entzerrer-Koeffizienten zugeleitet. Die Berechnungseinheit CU berechnet die Entzerrer-Koeffizienten in Abhängigkeit davon, welcher Betriebsmode (FDD oder TDD) von dem RAKE-Empfänger ausgeführt werden soll. Die Einstellung des gewünschten Betriebsmodes wird über eine Wählschaltung SEL vorgenommen. Neben der Berechnungseinheit CU wird der gewählte Betriebsmode auch dem RAKE-Finger-Abschnitt RF und dem Combiner CB mitgeteilt.

In einem Codespeicher CDS sind die in dem Mobilfunksystem verfügbaren Spreizcodes ("spreading codes") $C_{SP}$ und Verwürfelungscodes ("scrambling codes") $C_{SC}$ abgelegt. Die Codeelemente dieser Codes werden als Chips bezeichnet. Die genannten Codes sind sowohl für die Berechnungseinheit CU zur Berechnung der Entzerrer-Koeffizienten, als auch für den RAKE-Finger-Abschnitt RF des RAKE-Empfängers verfügbar.

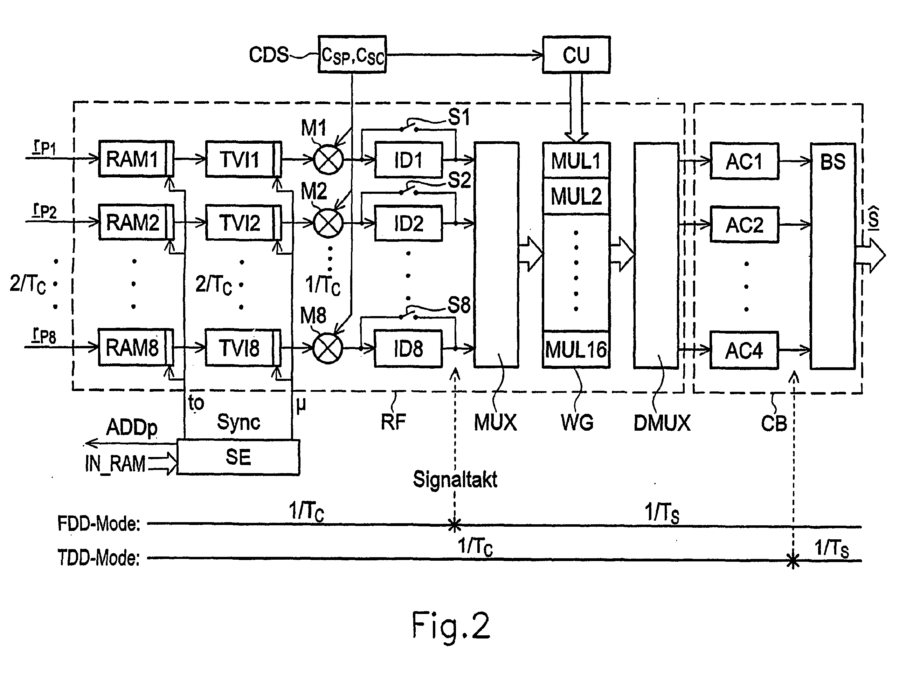

Fig. 2 zeigt den in Fig. 1 dargestellten RAKE-Finger-Abschnitt RF und den Combiner CB in größerem Detail.

Nach Fig. 2 weist der RAKE-Finger-Abschnitt RF beispielsweise acht (Hardware-)RAKE-Finger auf. Jeder dieser RAKE-Finger umfasst eingangsseitig einen Speicher mit wahlfreiem Zugriff RAM1-8, diesem nachgeschaltet einen zeitvarianten Interpolator TVI1-8 (Time Variant Interpolator,) und im weiteren Signalweg einen Multiplizierer M1-8, eine Integrate-and-Dump Einheit ID1-8, sowie die bereits erwähnte Gewichtungseinheit WG. Die Integrate-and-Dump Einheiten ID1-8 können jeweils über Schalter S1-8 überbrückt werden. Wie in Fig. 2 dargestellt und später noch näher erläutert, kann der Gewichtungseinheit WG in optionaler Weise ein Multiplexer MUX vorgeschaltet und ein Demultiplexer DMUX nachgeschaltet sein.

Die Arbeitsweise des RAKE-Fingers-Abschnitts RF ist wie folgt:

Zunächst wird der Empfang eines von einem einzigen Teilnehmer ausgesendeten Signals im FDD Mode betrachtet. Das als solche bekannte Grundprinzip des RAKE-Empfängers besteht darin, dass jeder RAKE-Finger genau einem Pfad ("Subkanal") der Luftschnittstelle zugeordnet ist. Das heißt, die den Eingängen der einzelnen RAKE-Finger zugeleiteten empfangenen Daten $\underline{r}_{P1}$ bzw. $\underline{r}_{P2}$ bzw. $\underline{r}_{P8}$ repräsentieren unterschiedliche Versionen ein und desselben ausgesendeten Signals, die den Empfänger über unterschiedliche Ausbreitungswege bzw. Pfade P1, P2, ..., P8 der Luftschnittstelle erreicht haben.

Die Aufteilung der Abtastwerte (Daten $\underline{r}$) in die einzelnen Pfadkomponenten $\underline{r}_{P1}$, $\underline{r}_{P2}$, ..., $\underline{r}_{P8}$ erfolgt unter Steuerung der Such- und Synchronisationseinheit SE mittels der Pfadinformation ADDp. ADDp gibt Adressbereiche des Eingangsspeichers IN_RAM an, in welchen Abtastwerte bezüglich des gleichen Übertragungspfads abgespeichert sind, und bewirkt, dass aus dem Eingangsspeicher IN_RAM Abtastwerte pfadbezogen ausgelesen und die entsprechenden Daten $\underline{r}_{p1}$, $\underline{r}_{P2}$, ... , $\underline{r}_{P8}$ den einzelnen RAKE-Fingern zugeleitet werden. Die Pfadinformation $ADD_P$ wird auch dem Kanalschätzer CE zugeleitet.

Die von der Such- und Synchronisationseinheit SE ausgegebene Synchronisationsinformation Sync umfasst Signale to und $\mu$ für jeden RAKE-Finger. Die Signale to stellen individuelle zeitgesteuerte Ausleseanweisungen für die Speicher RAM1-8 dar und bewirken eine Grobsynchronisation der einzelnen RAKE-Finger bis zu einer Genauigkeit von $T_C$.

Die Feinsynchronisation erfolgt mittels der Interpolatoren TVI1-8 durch Interpolation der Abtastwerte in den jeweiligen RAKE-Fingern in Abhängigkeit der individuellen Interpolationssignale $\mu$. Die Interpolationssignale $\mu$ werden in der Such- und Synchronisationseinheit SE beispielsweise durch einen Früh-Spät-Korrelator ermittelt.

Durch die Interpolation der Abtastwerte wird eine Verminderung der Abtastrate in jedem RAKE-Finger auf $1/T_C$ vorgenommen, d.h. jeder Chip wir durch einen Signalwert repräsentiert. Die Signale hinter den Interpolatoren TVI1-8 sind mit einer Genauigkeit von mindestens $T_C/2$ synchron.

Zusammengefaßt wird mittels der Speicher RAM1-8 und der Interpolatoren TVI1-8 eine Kompensation der unterschiedlichen Pfadlaufzeiten eines der Mehrwegeausbreitung unterliegenden Teilnehmersignals erreicht.

Im FDD Mode wird beispielsweise eine MF-Entzerrung durchgeführt. Zu diesem Zweck werden die ausgangsseitig der Interpolatoren TVI1-8 bereitstehenden Signale zunächst mittels Multiplizierern M1-8 entspreizt (Spreizcode: $C_{SP}$) und entwürfelt (Verwürfelungscode: $C_{SC}$). Dies erfolgt durch direktes, chipweises Aufmultiplizieren dieser beiden Codesequenzen auf die (ebenfalls im Chiptakt vorliegenden) Signale.

Die Schalter S1-S8 sind offen. Mittels der Integrate-and-Dump Einheiten ID1, ID2,...ID8 werden die entspreizten und entwürfelten Datensignale über eine Symbolzeitdauer $T_S$ akkumuliert. Die Akkumulation bewirkt in jedem RAKE-Finger eine Signalratenverminderung auf den Wert $1/T_S$.

Die Symbolzeitdauer $T_S$ ist abhängig von dem Spreizfaktor Q des verwendeten Spreizcodes $C_{SP}$. Der Spreizfaktor Q gibt die Anzahl der Chips pro Datensymbol an, d.h. $Q = T_S/T_C$. Im FDD Mode von UMTS kann Q Werte zwischen 2 und 512 annehmen.

Die nun im Symboltakt vorliegenden pfadbezogenen Datensymbole werden mittels Muliplizierern MUL1, MUL2, ..., MUL16 der Gewichtungseinheit WG mit den entsprechenden, von der Berechnungseinheit CU im Symboltakt ausgegebenen MF-Entzerrer-Koeffizienten multipliziert. Jedes Datensymbol wird dabei mit einem Entzerrer-Koeffizienten multipliziert.

Die Anzahl der Multiplizierer MUL1-16 ist so zu wählen, dass auch bei kleinem Spreizfaktor Q ausreichend Multipliziererkapazität vorhanden ist. Im vorliegenden Beispiel werden 16 Multiplizierer MUL1-16 eingesetzt. Da durch Multiplexierung der RAKE-Finger deren effektive Anzahl größer als die Anzahl der Multiplizierer MUL1-16 sein kann (wird im folgenden noch erläutert), erfolgt die Verteilung der Signale der einzelnen RAKE-Finger auf die Multiplizierer MUL1-16 über einen Multiplexer MUX, sowie geeignete, hier nicht dargestellte Zwischenspeicher. Durch den Demultiplexer DMUX wird die Zusammenführung der Signale auf die einzelnen Multiplizierer MUL1-16 wieder rückgängig gemacht. An den Ausgängen des Demultiplexers DMUX stehen daher wieder pfadbezogene Signale bereit.

Der Combiner CB umfasst z.B. vier Akkumulatoren AC1, AC2, AC3, AC4. Jeder einzelne Akkumulator AC1, AC2, AC3, AC4 arbeitet als Maximum-Ratio-Combiner (MRC), d.h. führt die am Ausgang des RAKE-Finger-Abschnitts RF vorhandenen Pfadversionen wieder zu einem Teilnehmersignal zusammen. Sofern nur ein einziges Teilnehmersignal detektiert wird (d.h. im FDD Mode, wo nur Signalversionen zu diesem Teilnehmersignal im RAKE-Empfänger verarbeitet werden), wird lediglich ein Akkumulator, z.B. AC1, benötigt. Das auf diese Weise kombinierte Signal wird in einem Pufferspeicher BS zwischengespeichert und bildet das rekonstruierte gesendete Teilnehmersignal $\underline{\hat{s}}$.

Die Arbeitsweise des RAKE-Finger-Abschnitts RF bei der Mehrteilnehmer-Entzerrung im TDD Mode unterscheidet sich von der vorstehend beschriebenen Arbeitsweise im FDD Mode zunächst durch die Aufteilung der Abtastwerte $\underline{r}$ auf die einzelnen RAKE-Finger. Die RAKE-Finger sind hier nicht bestimmten Pfaden der Luftschnittstelle zugeordnet, und es erfolgt somit auch keine pfadindividuelle Synchronisierung aller RAKE-Finger.

Statt dessen wird nur ein erster RAKE-Finger auf einen Kanal synchronisiert und zwischen den restlichen Fingern wird ein fester relativer Zeitversatz von jeweils einer Symbolzeitdauer, d.h. Q Chips, eingestellt. Dies wird z.B. dadurch erreicht, dass alle weiteren RAKE-Finger jeweils mit einem Zeitversatz von $T_C \cdot Q$ zum vorherigen Finger auf die in den Speichern RAM1, RAM2, ..., RAM8 abgelegten Daten zugreifen. Diese sind identisch, das heisst, bei den in den Speichern RAM1, RAM2, ..., RAM8 abgelegten Daten handelt es sich jeweils um die Abtastwerte $\underline{r}$.

Ein weiterer Unterschied zum FDD Mode besteht darin, dass im TDD Mode, wie bereits erwähnt, eine JD-Entzerrung durchgeführt wird. Der wesentliche Unterschied zwischen TDD Mode und FDD Mode besteht darin, dass die Gewichtungseinheit WG im Chiptakt arbeitet, d.h. dass von der Berechnungseinheit CU die Entzerrer-Koeffizienten Chip für Chip berechnet und von der Gewichtungseinheit WG Chip für Chip auf die Signale in den RAKE-Fingern aufmultipliziert werden. Die Entspreizung und Entwürfelung der empfangenen Signale wird im TDD Mode im Entzerrungsprozess vollzogen.

Demzufolge wird im TDD Mode keine Entspreizung/Entwürfelung der Signale durch die Mutliplizierer M1-8 vorgenommen, und die Inegrate-and-Dump Einheiten ID1-8 werden im TDD Mode durch Schließen der Schalter S1-8 überbrückt. Dies hat zur Folge, dass am Eingang des Multiplexers MUX die Ausgangssignale der Interpolatoren TVI1-8 weiterhin im Chiptakt $1/T_C$ vorliegen.

Im Signalweg hinter der Gewichtungseinheit WG wird mittels der Akkumulatoren AC1-4 eine Zusammenführung der Komponenten der detektierten Teilnehmersignale durchgeführt. Auch hier ist jeder Akkumulator AC1-4 einem Teilnehmersignal oder Kanal zugeordnet und führt bezüglich diesem - wie beim FDD Mode - eine MRC-Operation durch. Im TDD Mode kommt jedoch hinzu, dass jeder Akkumulator AC1-4 auch als Integrate-and-Dump Einheit arbeitet, d.h. den Signaltakt vom Chiptakt auf den Symboltakt erniedrigt.

Für beide Modi gilt, dass im Gegensatz zu den möglichen Signalraten (Chiprate oder Symbolrate) die in den jeweiligen Einheiten verwendeten Verarbeitungsfrequenzen unterschiedlich sein können. Sie richten sich insbesondere danach, welche Hardware-Funktionseinheiten des RAKE-Empfängers gemultiplext und damit "mehrfach" genutzt werden. Dies wird im folgenden anhand einer für den Multimode-Betrieb geeigneten Auslegung der in den Fig. 1 und 2 dargestellten RAKE-Struktur erläutert:

Vorausgesetzt wird der in Fig. 2 dargestellte Basisband-Abschnitt des RAKE-Empfängers bestehend aus 8 Hardware-RAKE-Fingern, 16 Hardware-Multiplizierern MUL1-16 und vier Hardware-Akkumulatoren AC1-4. Vorausgesetzt wird ferner eine (nicht dargestellte) 4-fache Multiplexierung jedes (Hardware-) RAKE-Fingers, so dass effektiv 32 RAKE-Finger (8 tatsächliche und 24 virtuelle) zur Verfügung stehen. Hinzu kommt, dass jeder RAKE-Finger (in ebenfalls nicht dargestellter Weise) zweikanalig ausgeführt ist, da, wie bereits erwähnt, jeweils I- und Q-Kompo-

nenten der Daten $\underline{r}_{P1}$, $\underline{r}_{P2}$, ..., $\underline{r}_{P8}$ zu verarbeiten sind. Wird ferner berücksichtigt, dass eine komplexe Multiplikation die Ausführung von vier reellen Multiplikationen umfasst, ergibt sich für die Anzahl der in der Gewichtungseinheit WG von den Multiplizierern MUL1-16 in den beiden Modi durchzuführenden Multiplikationen:

FDD Mode: pro Symbolzeitdauer $T_S = Q \cdot T_C$ sind 256 reelle Multiplikationen (4 reelle Multiplikationen x 2 Komponenten x 32 Finger) durchzuführen; da sich für Q = 2 eine maximale Signalrate $1/T_S = 1/(2 \cdot T_C) = 2,048$ MHz ergibt, sind im ungünstigsten Fall (Q = 2) eine Anzahl von 256 reellen Multiplikationen innerhalb $T_S = 488$ ns auszuführen. Bei 16 Multiplizierern MUL1-16 muß eine Multiplikation dann spätestens nach 30,51 ns abgeschlossen sein. Diese Bedingung ist bei einer Verarbeitungsfrequenz von 32 MHz erfüllt.

TDD Mode: pro Chipzeitdauer $T_C$ sind 64 komplexe, d.h. 256 reelle Multiplikationen durchzuführen; somit sind bei einer Chiprate von $1/T_C = 4,096$ MHz 256 Multiplikationen in 244 ns auszuführen. Da folglich bei 16 Multiplizierern eine Multiplikation spätestens nach 15,25 ns beendet sein muss, muss das Multipliziererfeld MULI-16 mit einer Verarbeitungsfrequenz von 64 MHz getaktet werden.

Das heisst, im FDD Mode ist die benötigte Verarbeitungsfrequenz für die Gewichtungseinheit WG abhängig vom Spreizfaktor Q und beträgt 32 MHz/Q. Im TDD Mode beträgt sie unabhängig von dem Spreizfaktor Q unter den genannten Voraussetzungen stets 64 MHz.

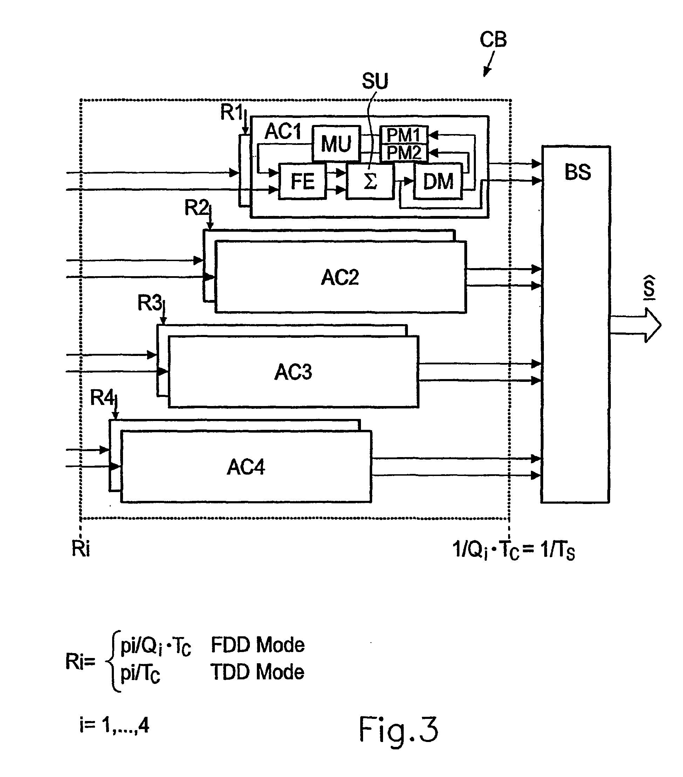

Fig. 3 zeigt den Combiner CB in größerer Einzelheit. In Fig. 3 ist erkennbar, dass jeder komplexe Akkumulator AC1-4 zur Akkumulation der I- und Q-Signalkomponenten zweikanalig ausgeführt ist. Wie bereits erwähnt, ist jeder komplexe Akkumulator AC1-4 genau einem physikalischen Kanal, beispielsweise DPCH (Dedicated Physical Control Channel), zugeordnet. Jeder Akkumulator AC1-4 umfasst eine Freigabeeinheit FE, einen Summierer SU, einen Demultiplexer DM, zwei Pufferspeicher PM1, PM2 und einen Multiplexer MU, dessen Ausgang der Freigabeeinheit FE zugeleitet ist.

Mit $p_i$ wird die Anzahl der insgesamt verfügbaren (tatsächlichen und gemultiplexten) RAKE-Finger bezeichnet, die einem i-ten physikalischen Kanal zugeordnet sind. Die Anzahl $p_i$ entspricht der Anzahl der detektierten Pfade dieses Kanals. Der in diesem Kanal verwendete Spreizfaktor wird mit $Q_i$ bezeichnet (die in den Kanälen verwendeten Spreizfaktoren können verschieden sein).

Am Eingang des dem i-ten physikalischen Kanal zugeordneten Akkumulators ACi, i = 1, ..., 4, tritt im FDD Mode eine auf diesen Kanal bezogene Datenrate $R_i = p_i/(Q_i \cdot T_C)$, d. h. die $P_i$-fache Symbolrate auf (da pro Symbolzeitdauer $p_i$ entzerrte Datensymbole kombiniert werden müssen). Im TDD Mode beträgt die kanalbezogene Datenrate $R_i$ am Eingang eines Akkumulators stets $p_i/T_C$ (pro Chipzeitdauer müssen $p_i$ entzerrte Chips kombiniert werden).

Im FDD Mode beträgt die kanalbezogene Datenrate am Ausgang des Akkumulators ACi $1/(Q_i \cdot T_C) = 1/T_S$, da $p_i$ einlaufende Datensymbole zu einem Datensymbol kombiniert werden. Die Ausgabe der kombinierten Datensymbole erfolgt unverändert im Symboltakt.

Im TDD Mode wird der Signaltakt durch die Akkumulation der einzelnen Chips über eine Symbolzeitdauer in den Symboltakt gewandelt. Die Akkumulatoren AC1-4 dienen somit nicht nur der Kombination der Signale aus unterschiedlichen RAKE-Fingern, sondern arbeiten darüber hinaus im TDD Mode als Integrate-and-Dump Einheit. Auch im TDD Mode beträgt die kanalbezogene Datenrate am Ausgang des Akkumulators $1/(Q_i \cdot T_C) = 1/T_S$.

Die Verwendung einer RAKE-Empfängerstruktur zur Durchführung einer JD-Entzerrung beruht darauf, dass die Systemmatrix eines JD-Übertragungssystems auf die Systemmatrix eines Q-fach überabgetasteten RAKE-Empfängers abgebildet werden kann. Dies wird im folgenden erläutert:

Ein Übertragungskanal bezüglich des k-ten Teilnehmers wird im Chiptakt-Kanalmodell, dargestellt im Matrix-Vektor-Formalismus, durch eine Matrix $\underline{\underline{A}}_G^{(k)}$ der Dimension $W_S \cdot Q \times (L_S + W_S - 1)$ beschrieben, welche sowohl die senderseitige Signalbearbeitung durch Aufmultiplizieren von Spreizcodes und Verwürfelungscodes auf die auszusendenden Datensymbole $\underline{s}$ als auch die bei der Übertragung über die Luftschnittstelle erlittenen Signalverzerrungen beschreibt. Mit $L_S$ wird die Kanallänge in Symbolen, d.h. die Anzahl der für das Kanalgedächtnis berücksichtigten Symbole, und mit $W_S$ die (wählbare) Anzahl der für die Entzerrung berücksichtigten Symbole bezeichnet. Entsprechend bezeichnet L die Kanallänge in Chips unter Zugrundelegung des Chiptakt-Kanalmodells und W bezeichnet die Anzahl der für die Entzerrung berücksichtigten Chips (Länge des "Equalizers" in Chips). Es gilt $L_S = \text{ceil}\{L/Q\}$ und $W_S = \text{ceil}\{W/Q\}$, wobei ceil $\{\cdot\}$ zur nächst höheren ganzzahligen Zahl aufrundet. Ein hochgestelltes T bezeichnet den transponierten Vektor bzw. die transponierte Matrix, Unterstreichungen deuten an, dass eine Größe komplexwertig ist.

Eine Sequenz bestehend aus $L_S + W_S - 1$ auszusendenden Datensymbolen $\left\{ \underline{s}_{n-L_S+1}^k, \cdots, \underline{s}_n^k, \cdots, \underline{s}_{n+W_S-1}^k \right\}$ des k-ten Teilnehmers wird im Vektor-Matrix-Formalismus durch den (Spalten-)Vektor $\underline{s}_n^{(k)} = (\underline{s}_{n-L_S+1}^k \cdots \underline{s}_{n+W_S-1}^k)^T$ der Dimension $(L_S + W_S - 1) \times 1$ zum n-ten Zeitschritt beschrieben.

Bezüglich aller K Teilnehmer wird mit

$$\underline{s}_n = (\underline{s}_n^{(1)T} \cdot \cdot \underline{s}_n^{(k)T} \cdot \cdot \underline{s}_n^{(K)T})^T \tag{1}$$

der sogenannte "kombinierte" Vektor sämtlicher gesendeter Datensymbole, bezogen auf den n-ten Zeitschritt, gebildet. Seine Dimension ist $K \cdot (L_s + W_s - 1) \times 1$.

Die gesendeten Datensymbole werden spreizcodiert, über jeweils mehrere Pfade zum Empfänger übertragen und dort mittels JD entzerrt.

Die Gleichung für die Rekonstruktion $\hat{\underline{s}}_n^k$ des vom k-ten Teilnehmer zum Zeitschritt n ausgesendeten Datensymbols im Empfänger lautet:

$$\hat{\underline{s}}_n^k = \underline{m}^{(k)} \underline{r}_n$$
$$\text{mit } \underline{r}_n = \underline{A}_G \underline{s}_n \tag{2}$$

Dabei wird das gesamte Mehrteilnehmer-System bestehend aus K Teilnehmern (einschließlich Spreizcodierungen und bei der Signalübertragung auftretender Signalverzerrungen) durch die sogenannte Mehrteilnehmer-Systemmatrix $\underline{A}_G$ der Dimension $W_s \cdot Q \times K(L_s + W_s - 1)$ beschrieben.

Der Vektor $\underline{r}_n$ repräsentiert die empfangenen Daten im Chiptakt. Die empfängerseitige JD-Entzerrung der empfangenen Daten bezüglich des k-ten Teilnehmers wird in diesem Modell durch einen Entzerrer-Vektor $\underline{m}^{(k)}$ der Dimension $1 \times W_s \cdot Q$ realisiert, der auf der Basis der geschätzten Kanalkoeffizienten von der Berechnungseinheit CU berechnet wird. Die $W_s \cdot Q$ Elemente des Entzerrer-Vektors $\underline{m}^{(k)}$ sind die Entzerrer-Koeffizienten für den k-ten Teilnehmer. Die Berechnungsvorschrift des Entzerrer-Vekors $\underline{m}^{(k)}$ ist abhängig von dem gewählten Entzerrer-Algorithmus. Für den Fall einer ZF-Entzerrung wird sie später noch angegeben.

Die Mehrteilnehmer-Systemmatrix $\underline{A}_G$ ergibt sich in folgender Weise aus Systemmatrizen $\underline{A}_G^{(k)}$ der Dimension $W_s \cdot Q \times (L_s + W_s - 1)$ bezüglich der einzelnen Teilnehmer:

$$\underline{A}_G = \left[ \underline{A}_G^{(1)} \underline{A}_G^{(2)} \cdot \cdot \underline{A}_G^{(K)} \right] \tag{3}$$

Die Teilnehmer-Systemmatrizen $\underline{A}_G^{(k)}$ sind definiert durch:

$$\underline{A}_G^{(k)} = \begin{bmatrix} \left[ \underline{A}'^{(k)} \right] 0 \ldots 0 \\ 0 \left[ \underline{A}'^{(k)} \right] 0 \ldots 0 \\ 0 \, 0 \left[ \underline{A}'^{(k)} \right] 0 \ldots 0 \\ \ddots \\ 0 \ldots 0 \left[ \underline{A}'^{(k)} \right] \end{bmatrix} \tag{4}$$

wobei $\underline{A}'^{(k)}$ im allgemeinen Fall eine Matrix der Dimension $Q \times L_s$ ist, die hier zur besseren Darstellbarkeit für den Sonderfall $L_s = 2$ (d.h. der Dimension $Q \times 2$) angegeben ist.

$$\underline{A}'^{(k)} = \begin{bmatrix} \underline{a}^{(k)}_{Q+1} & \underline{a}^{(k)}_1 \\ \underline{a}^{(k)}_{Q+2} & \underline{a}^{(k)}_2 \\ \vdots & \vdots \\ \underline{a}^{(k)}_{Q+L-1} & \underline{a}^{(k)}_{L-1} \\ 0 & \underline{a}^{(k)}_L \\ \vdots & \vdots \\ 0 & \underline{a}^{(k)}_Q \end{bmatrix} \tag{5}$$

Die Elemente der Matrix $\underline{A}'^{(k)}$ ergeben sich aus den jeweils verwendeten Spreizcodes und den Kanaleigenschaften:

$$\underline{a}^{(k)} = \underline{C}'^{(k)} \underline{h}^{(k)T} \tag{6}$$

Dabei ist $\underline{a}^{(k)} = \left( \underline{a}^{(k)}_1 \cdot \cdot \underline{a}^{(k)}_{Q+L-1} \right)^T$ ein Vektor der Dimension $(Q+L-1) \times 1$ und $\underline{C}'^{(k)}$ ist eine durch den Spreizcode $C_{SP}$ des betrachteten k-ten Teilnehmers, hier mit $\underline{c}^{(k)} = (\underline{c}^k_1 \cdot \cdot \underline{c}^k_Q)$ bezeichnet, gegebene Matrix

$$\underline{C}'^{(k)} = \begin{bmatrix} \underline{c}^k_1 & 0 & \cdots & 0 \\ \underline{c}^k_2 & \underline{c}^k_1 & & \vdots \\ \vdots & \underline{c}^k_2 & & \\ \underline{c}^k_Q & & & \vdots \\ 0 & \underline{c}^k_Q & & 0 \\ \vdots & \cdot & & \underline{c}^k_1 \\ & & \cdot & \underline{c}^k_2 \\ \vdots & & & \vdots \\ 0 & \cdots & 0 & \underline{c}^k_Q \end{bmatrix} \tag{7}$$

der Dimension $(Q+L-1) \times L$.

$\underline{h}^{(k)} = \left( \underline{h}^k_1 \cdot \cdot \underline{h}^k_L \right)^T$ ist der (Spalten-) Vektor, der aus der Kanalimpulsantwort $\underline{h}^k_1$, $\underline{h}^k_2$, ..., $\underline{h}^k_L$ der Länge L bezüglich des k-ten Teilnehmers gebildet ist (wie bereits erwähnt, wird mit L die Kanallänge (Kanalgedächtnis) in Chips bezeichnet).

Es wird zur einfacheren Darstellung angenommen, daß kein Verwürfelungscode eingesetzt wird.

Eine analoge Beschreibung eines Übertragungssystems (jedoch bezogen auf eine blockweise Datenübertragung) ist im Stand der Technik bekannt und ausführlich in den Buch "Analyse und Entwurf digitaler Mobilfunksysteme" von P. Jung, B.G. Teubner Verlag Stuttgart, 1997, auf den Seiten 188-215 beschrieben.

Es wird deutlich, dass der zur Berechnung eines gesendeten Datensymbols des k-ten Teilnehmers benötigte "Entzerrer" $\underline{m}^{(k)}$ aus Q "Sub-Entzerrern" der Länge $W_s$ besteht. D.h., dass zur JD-Entzerrung ein mit Q-facher Überabtastung betriebener RAKE-Empfänger benötigt wird. Ferner wird aus der vorstehenden Analyse deutlich, dass die Entspreizung ein integraler Bestandteil der Entzerrung wird.

Bei der ZF-Entzerrung werden die Entzerrer-Koeffizienten (d.h. die Elemente des Entzerrervektors $\underline{m}^{(k)}$) durch Lösen des Gleichungssystems

$$\underline{m}^{(k)} \underline{A}_G \;=\; \varsigma_j \qquad\qquad\qquad (8)$$

berechnet. Dabei ist $\varsigma_j$ ein $1\times K\cdot(L_s+W_s-1)$ (Zeilen-) Vektor, der die ZF-Bedingung bezüglich eines bestimmten (k-ten) Teilnehmers vorgibt. Der ZF-Vektor $\varsigma_j$ läßt sich folgendermaßen darstellen

$$\varsigma_j \;=\; \bigl(0 \ldots 0\; 1\; 0 \ldots 0\bigr) \qquad\qquad\qquad (9)$$

wobei die 1 an der j-ten Position,
$j = (k-1)\,(L_s+W_s-1)+1, \ldots, k(L_s+W_s-1)$ steht.

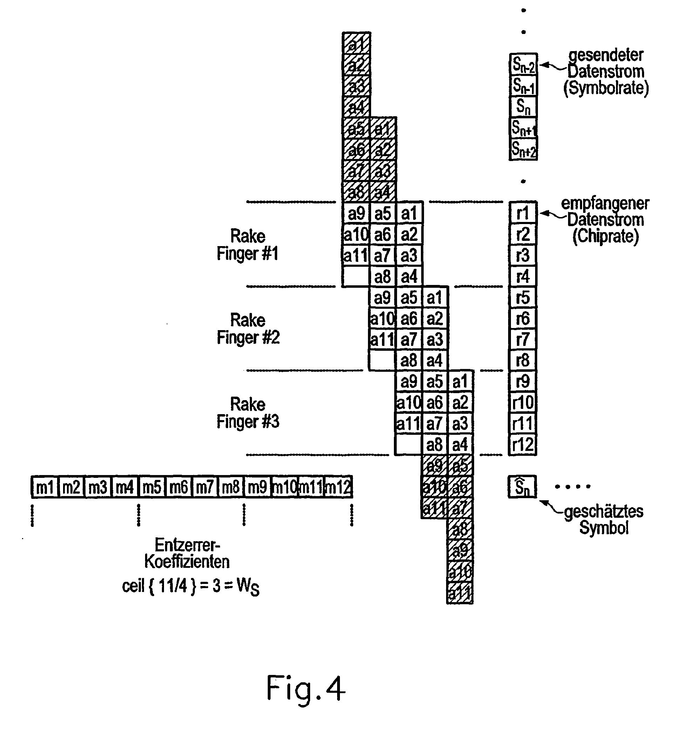

Fig. 4 veranschaulicht die Berechnung von $\underline{\hat{s}}_n^k$ für Q = 4, $W_s$ = 3, $L_s$ = 3 (L und W sind hier 11) und K = 1 durch den RAKE-Empfänger anhand einer Darstellung eines Ausschnitts der Systemmatrix $\underline{A}_G$, der Entzerrer-Koeffizienten m1 bis m12, der (von dem einen Teilnehmer) gesendeten Daten $\underline{s}_{n-2}$ bis $\underline{s}_{n+2}$ (in Symbolrate), der empfangenen Daten r1 bis r12 (in Chiprate) und des für den n-ten Zeitschritt geschätzten Datensymbols $\hat{\underline{s}}_n$ (Unterstreichungen werden ingnoriert). Für jede Q Chips wird genau ein Q-fach überabgetasteter Finger des RAKE-Empfängers verwendet. Der RAKE-Finger #1 verarbeitet die ersten empfangenen Q Chips, der RAKE-Finger #2 verarbeitet die um Q Chips verzögerten zweiten Q Chips, usw. D.h., das Eingangssignal an jedem RAKE-Finger ist ein Q-fach überabgetastetes Signal. Jeder Abtastwert enthält dieselbe Information bezüglich des gesendeten Datensymbols, jedoch unterschiedliche Information bezüglich des verwendeten Spreizcodes (und ggf. Verwürfelungscodes) und des Übertragungskanals.

Die ZF-Entzerrung sowie ein mögliches Verfahren zur Lösung der Gleichung 8 sind in der deutschen Patentanmeldung DE 101 06 391.1 ausführlich beschrieben.

**Patentansprüche**

1. RAKE-Empfänger für den Empfang von über verschiedene Ausbreitungspfade eines Übertragungskanals übertragenen, mit Chipsequenzen spreizcodierten Signalen im FDD und TDD Mode, mit

   - einer Mehrzahl von RAKE-Fingern (RAM1-8, TVI1-8, M1-8, S1-8, ID1-8),
   - einem den RAKE-Fingern (RAM1-8, TVI1-8, M1-8, S1-8, ID1-8) zugeordneten Entzerrermittel (WG) zum Entzerren der in den einzelnen RAKE-Fingern verarbeiteten Signale gemäß Entzerrer-Koeffizienten,
   - einem Mittel (CU) zum Berechnen der Entzerrer-Koeffizienten wahlweise für den FDD und den TDD Mode, wobei
   - für den TDD Mode die Entzerrer-Koeffizienten nach einem Mehrteilnehmer-Verfahren Ausbreitungspfad-unspezifisch für jeden Chip der zu entzerrenden Signale berechnet und auf diese angewendet werden.

2. RAKE-Empfänger nach Anspruch 1,
   **dadurch gekennzeichnet,**

   - **dass** im Signalweg vor dem Entzerrermittel (WG) in jedem RAKE-Finger (RAM1-8, TVI1-8, M1-8, S1-8, ID1-8) eine Einheit zur Signalratenverminderung (ID1-8), insbesondere Akkumulator, vorgesehen ist, und
   - **dass** ein Mittel (S1-8) zum Überbrücken der Einheit zur Signalratenverminderung (ID1-8) vorhanden ist.

3. RAKE-Empfänger nach Anspruch 1 oder 2,
   **dadurch gekennzeichnet,**

- **dass** im Signalweg vor der Einheit zur Signalratenverminderung (ID1-8) in jedem RAKE-Finger wenigstens ein Entspreizmittel (M1-8), insbesondere Multiplizierer, zum Entspreizen des in dem RAKE-Finger verarbeiteten Signals vorgesehen ist, und
- **dass** dieses Entspreizmittel (M1-8) im TDD Mode deaktiviert ist.

4. RAKE-Empfänger nach einem der vorhergehenden Ansprüche,
**dadurch gekennzeichnet,**

- **dass** im Signalweg hinter dem Entzerrermittel (WG) ein Combiner (CB) vorgesehen ist, der Ausgangssignale von RAKE-Fingern, die demselben physikalischen Kanal zugeordnet sind, akkumuliert, und
- **dass** der Combiner (CB) ausgelegt ist, im TDD Mode eine Signalratenverminderung von der Chiprate in die Symbolrate durchzuführen.

5. RAKE-Empfänger nach einem der vorhergehenden Ansprüche,
**dadurch gekennzeichnet,**

- **dass** dem Entzerrermittel (WG) ein Multiplexer (MUX) vorgeschaltet und ein Demultiplexer (DMUX) nachgeschaltet ist.

6. RAKE-Empfänger nach einem der vorhergehenden Ansprüche,
**dadurch gekennzeichnet,**

- **dass** das Mittel (CU) zum Berechnen der Entzerrer-Koeffizienten ausgelegt ist, ein Zero Forcing Berechnungsverfahren zur Ermittlung der Entzerrer-Koeffizienten im TDD Mode einzusetzen.

7. RAKE-Empfänger nach einem der vorhergehenden Ansprüche,
**dadurch gekennzeichnet,**

- **dass** das Entzerrermittel (WG) ein in den RAKE-Fingern (RAM1-8, TVI1-8, M1-8, S1-8, ID1-8) angeordnetes Multipliziererfeld (MUL1-16) ist, mittels welchem die Abtastwerte der zu entzerrenden Signale mit den Entzerrer-Koeffizienten multipliziert werden.

8. Verfahren zum Empfangen von mit Chipsequenzen spreizcodierten Signalen im FDD und TDD Mode mittels eines RAKE-Empfängers, welcher ein Entzerrermittel (WG) zur Entzerrung der in den einzelnen RAKE-Fingern verarbeiteten Signale gemäß Entzerrer-Koeffizienten umfasst, mit den Schritten:

- Wahl einer Mode FDD oder TDD,
- Berechnung von Entzerrer-Koeffizienten in Abhängigkeit von dem gewählten Mode, wobei für den TDD Mode die Entzerrer-Koeffizienten nach einem Mehrteilnehmer-Verfahren für jeden Chip der zu entzerrenden Signale berechnet werden, und
- im TDD Mode chipweises Anwenden der berechneten Entzerrer-Koeffizienten auf die Chips der zu entzerrenden Signale.

9. Verfahren nach Anspruch 8,
**dadurch gekennzeichnet,**

- **dass** im TDD Mode ein Zero Forcing Verfahren zur Berechnung der Entzerrer-Koeffizienten eingesetzt wird.

**Claims**

1. RAKE receiver for reception of signals, which are transmitted by different propagation paths of a transmission channel and are spread-coded with chip sequences, in the FDD and TDD modes, having

- two or more RAKE fingers (RAM1-8, TVI1-8, M1-8, S1-8, ID1-8),
- an equalizer means (WG) which is associated with the RAKE fingers (RAM1-8, TVI1-8, M1-8, S1-8, ID1-8) for equalization of the signals processed in the individual RAKE fingers, using equalizer coefficients,
- a means (CU) for calculation of the equalizer coefficients for the FDD and TDD modes selectively, with

- the equalizer coefficients for the TDD mode being calculated using a multiple subscriber method on a progagation path non-specific basis for each chip of the signals to be equalized, and being applied to these signals.

2. RAKE receiver according to Claim 1,
**characterized**

- **in that** a unit for signal rate reduction (ID1-8), in particular an accumulator, is provided in the signal path upstream of the equalizer means (WG) in each RAKE finger (RAM1-8, TVI1-8, M1-8, S1-8, ID1-8), and
- **in that** a means (S1-8) is provided for bridging the unit for signal rate reduction (ID1-8).

3. RAKE receiver according to Claim 1 or 2,
**characterized**

- **in that** at least one despreading means (M1-8), in particular a multiplier, for despreading the signal that is processed in the RAKE finger is provided in the signal path upstream of the unit for signal rate reduction (ID1-8) in each RAKE finger, and
- **in that** this despreading means (M1-8) is deactivated in the TDD mode.

4. RAKE receiver according to one of the preceding claims,
**characterized**

- **in that** a combiner (CB) is provided in the signal path downstream of the equalizer means (WG) and accumulates output signals from RAKE fingers which are associated with the same physical channel, and
- **in that** the combiner (CB) is designed to carry out signal rate reduction from the chip rate to the symbol rate in the TDD mode.

5. RAKE receiver according to one of the preceding claims,
**characterized**

- **in that** a multiplexer (MUX) is connected upstream of the equalizer means (WG), and a demultiplexer (DMUX) is connected downstream of it.

6. RAKE receiver according to one of the preceding claims,
**characterized**

- **in** the means (CU) for calculation of the equalizer coefficients is designed to use a zero forcing calculation method for determination of the equalizer coefficients in the TDD mode.

7. RAKE receiver according to one of the preceding claims,
**characterized**

- **in that** the equalizer means (WG) is a multiplication field (MUL1-16) which is arranged in the RAKE fingers (RAM1-8, TVI1-8, M1-8, S1-8, ID1-8), and by means of which the sample values of the signals to be equalized are multiplied by the equalizer coefficients.

8. Method for reception of signals which are spread-coded with chip sequences in the FDD and TDD mode by means of a RAKE receiver which comprises an equalizer means (WG) for equalization of the signals which are processed in the individual RAKE fingers, using equalizer coefficients, comprising the following steps:

- selection of an FDD or TDD mode,
- calculation of equalizer coefficients as a function of the selected mode, with the equalizer coefficients for the TDD mode being calculated using a multiple subscriber method for each chip of the signals to be equalized, and
- application of the calculated equalizer coefficients chip-by-chip to the chips of the signals to be equalized in the TDD mode.

9. Method according to Claim 8,
**characterized**

- **in that** a zero forcing method is used for calculation of the equalizer coefficients in the TDD mode.

**Revendications**

1.  Récepteur RAKE pour la réception de signaux transmis sur divers trajets de propagation d'un canal de transmission et codés à étalement par des séquences de puce dans le mode FDD et TDD comprenant

    - une pluralité de doigts RAKE (RAM1-8, TVI1-8, M1-8, S1-8, ID1-8) ;
    - un moyen (WG) d'égalisation associé à l'un des doigts RAKE (RAM1-8, TVI1-8, M1-8, S1-8, ID1-8) pour égaliser les signaux traités dans les divers doigts RAKE conformément à des coefficients d'égalisateur ;
    - un moyen (CU) de calcul des coefficients d'égalisateur au choix pour le mode FDD et pour le mode TDD, dans lequel
    - pour le mode TDD, les coefficients d'égalisateur sont calculés suivant un trajet de propagation dans un procédé à plusieurs participants d'une façon non spécifique pour chaque puce des signaux à égaliser et sont appliqués à ceux-ci.

2.  Récepteur RAKE suivant la revendication 1,
    **caractérisé**

    - **en ce que** dans le trajet du signal en amont du moyen (WG) d'égalisation, il est prévu dans chaque doigt RAKE (RAM1-8, TVI1-8, M1-8, S1-8, ID1-8) une unité de diminution (ID1-8) du débit de signal, notamment un accumulateur ; et
    - **en ce qu'**il y a un moyen (S1-8) pour shunter l'unité de diminution (ID1-8) du débit de signal.

3.  Récepteur RAKE suivant la revendication 1 ou 2,
    **caractérisé**

    - **en ce que** le trajet du signal en amont de l'unité de diminution (ID1-8) du débit de signal, il est prévu dans chaque doigt RAKE au moins un moyen (M1-8) de désétalement, notamment un multiplicateur, pour désétaler le signal traité dans le doigt RAKE ; et
    - **en ce que** ce moyen (M1-8) de désétalement est désactivé dans le mode TDD.

4.  Récepteur RAKE suivant l'une des revendications précédentes,
    **caractérisé**

    - **en ce que**, dans le trajet du signal en aval du moyen (WG) d'égalisation, il est prévu un combineur (CB) qui accumule des signaux de sortie de doigt RAKE qui sont associés au même canal physique ; et
    - **en ce que** le combineur (CB) est conçu pour effectuer dans le mode TDD une diminution du débit de signal du débit de puce au débit de symbole.

5.  Récepteur RAKE suivant l'une des revendications précédentes,
    **caractérisé**

    - **en ce qu'**il est monté en amont du moyen (WG) d'égalisation un multiplexeur (MUX) et en aval un démultiplexeur (DMUX).

6.  Récepteur RAKE suivant l'une des revendications précédentes,
    **caractérisé**

    - **en ce que** le moyen (CU) de calcul des coefficients d'égalisateur est conçu pour utiliser un procédé de calcul zéro forcing pour déterminer les coefficients d'égalisateur dans le mode TDD.

7.  Récepteur RAKE suivant l'une des revendications précédentes,
    **caractérisé**

    - **en ce que** le moyen (WG) d'égalisation est un champ (MUL1-16) de multiplicateur qui est disposé dans les doigts RAKE (RAM1-8, TVI1-8, M1-8, S1-8, ID1-8) et au moyen duquel les valeurs d'échantillonnage des signaux à égaliser sont multipliées par les coefficients d'égalisateur.

8.  Procédé de réception de signaux codés à étalement par des séquences de puce dans le mode FDD et dans le mode TDD au moyen d'un récepteur RAKE qui comprend un moyen (WG) d'égalisation pour égaliser les signaux traités dans les divers doigts RAKE conformément à des coefficients d'égalisateur comprenant les stades :

    - choix d'un mode FDD ou TDD ;
    - calcul des coefficients d'égalisateur en fonction du mode choisi en calculant pour le mode TDD les coefficients d'égalisateur suivant un procédé à plusieurs participants pour chaque puce des signaux à égaliser ; et
    - dans le mode TDD, utilisation puce par puce des coefficients d'égalisateur calculés sur les puces des signaux à égaliser.

9.  Procédé suivant la revendication 8,
    **caractérisé**

    - **en ce que** l'on utilise dans le mode TDD un procédé zéro forcing pour calculer les coefficients d'égalisateur.

Fig.1

Fig.2

EP 1 391 051 B1

$$Ri= \begin{cases} pi/Q_i \cdot T_C & \text{FDD Mode} \\ pi/T_C & \text{TDD Mode} \end{cases}$$

i= 1,...,4

Fig.3

Fig.4